(19) **Europäisches Patentamt**
**European Patent Office**
**Office européen des brevets**

(11) **EP 2 077 608 B1**

(12) **EUROPEAN PATENT SPECIFICATION**

(45) Date of publication and mention
of the grant of the patent:
**30.11.2016 Bulletin 2016/48**

(51) Int Cl.:
*H02M 1/08* (2006.01)    *H02M 1/36* (2007.01)

(21) Application number: **08000024.3**

(22) Date of filing: **02.01.2008**

(54) **Drive circuit for a switch in a switching converter**

Treiberschaltung für einen Schalter in einem Schaltwandler

Circuit de commande d'un interrupteur dans un convertisseur à commutation

(84) Designated Contracting States:
**DE FR GB**

(43) Date of publication of application:
**08.07.2009 Bulletin 2009/28**

(60) Divisional application:
**13163720.9 / 2 658 103**

(73) Proprietor: **Infineon Technologies Austria AG
9500 Villach (AT)**

(72) Inventors:
• **Gong, Xiaowu
Singapore 689096 (SG)**
• **Kok, Siu Kam
Sims Ville
Singapore (SG)**

(74) Representative: **Westphal, Mussgnug & Partner
Patentanwälte mbB
Herzog-Wilhelm-Strasse 26
80331 München (DE)**

(56) References cited:
**EP-A- 0 122 492       US-A- 6 100 678
US-A1- 2004 145 924    US-A1- 2006 261 678
US-A1- 2007 064 358    US-A1- 2007 120 544
US-A1- 2007 296 386**

• **LINEAR TECHNOLOGY: "LTM4600HV
Datasheet" 2005, LINEAR TECHNOLOGY ,
XP002489727 * pages 6,8,10 - page 12 ***
• **ANONYMOUS: 'F3 PWM controller ICE3BS03LJG
Off-Line SMPS Current Mode Controller with
integrated 500V Startup Cell (Latched and
frequency jitter mode)', [Online] 06 December
2007, WEBSITE INFINEON TECHNOLOGIES AG,
XP055261952 Retrieved from the Internet:
<URL:http://www.infineon.com/dgdl/Infineon-
ICE3BS03LJG-DS-v02_00-en.pdf?fileId=db3a30
4 31689f4420116b2b751ff05b0> [retrieved on
2016-03-31]**
• **ANONYMOUS: 'CoolSET(TM)-F3 (Jitter Version)
ICE3B0365JG ICE3B0565JG Off-Line SMPS
Current Mode Controller with integrated 650V
Startup Cell/Depletion CoolMOS(TM)', [Online] 14
November 2006, WEBSITE INFINEON,
XP055261970 Retrieved from the Internet:
<URL:http://www.infineon.com/dgdl/Infineon-
COOLSET_F3JG-DS-v02_00-en.pdf?fileId=db3a
30 4412b407950112b428f96f3f62> [retrieved on
2016-03-31]**

## Description

The present invention relates to a drive circuit for a switch in a switching converter.

Such drive circuits are, for example, disclosed in EP 1 648 080 A1, or in datasheet "F3 ICE3BS02L", version 1.1, 28 Sep 2005, Infineon Technologies AG, Munich.

Datasheet "LTM4600HV", 2005, LINEAR TECHNOLOGY CORPORATION, 2005, discloses an integrated circuit for driving a switch in a switching converter. This integrated circuit has a soft-start and a latchoff capability. When a voltage at a soft-start input is below 0.8V, the integrated circuit enters a low quiescent current shutdown mode. When the voltage at the soft-start input reaches 1.5V, the integrated circuit drives the switch such that a voltage through an inductor of the switching converter is limited, and when the voltage reaches 3V, the limitation of the current through the inductor is released.

US 2007/0064358 A1 discloses a switching power supply device that may enter a latch-off mode in case of an overload. In the latch-off mode, switching a switch of the power supply device is prevented until an input voltage of the power supply device drops.

US 2007/0296386 A1 discloses a switching power-supply circuit that includes a control circuit with a soft-start node. The control circuit generates a drive signal based on an error signal, whereas the error signal is not generated until a voltage at the soft-start node has reached a predetermined value.

Datasheet "F3 PWM controller ICE3BS03LJG Off-Line SMPS Current Mode Controller with integrated 500V Startup Cell (Latched and frequency jitter Mode ), Version 2.0, 6 Dec 2007, Infineon Technologies AG, Munich, discloses an integrated drive circuit for driving a switch in a switching converter. This drive circuit has a built-in soft start function that causes the drive circuit to operate in a soft-start mode for a predefined time period. During the soft-start mode, a duty cycle of a drive signal provided by the drive circuit increases gradually.

Datasheet "CoolSET™-F3 (Jitter Version) ICE3BO365JG ICE3B0565JG Off-Line SMPS Current Mode Controller with integrated 650V Startup Cell/Depletion C001MOS™", Version 2.0, 14 Nov 06, Infineon Technologies AG, Munich, discloses an integrated drive circuit for driving a switch in a switching converter. This drive circuit has a soft-start pin and operates in a soft-start mode dependent on a voltage received at the soft-start mode.

The object of the present invention is to provide a drive circuit that can be controlled/adjusted via an external terminal without having to increase the number of the terminals.

This object is solved by a drive circuit according to claim 1.

Further aspects of the invention are subject to subclaims.

Examples of invention will now be explained with reference to drawings. The drawings serve to illustrate the basic principles of the invention. Therefore, only those aspect required for illustrating the basic principle are depicted. Same reference signs denote same circuit blocks and same signals throughout the drawings.

Figure 1          is an overview of a switching converter comprising a switch and a drive circuit for driving the switch.

Figure 2          shows an example of the drive circuit.

Figure 3          illustrates operation of the drive circuit in a normal operation mode.

Figure 4          shows an example of a charging/discharging circuit that is used in the drive circuit for charging/discharging an external soft-start capacitor.

Figure 5          illustrates operation of the drive circuit in a so-called soft-start mode.

Figure 6          shows an example of a soft-start control circuit that is used in the drive circuit to control a soft-start mode.

Figure 7          shows an example of a signal generating circuit that produces a drive signal for the switch.

Figure 8          shows an example of a latch-off control circuit used in the drive circuit 100 for controlling a latch-off mode of the drive circuit.

Figure 9          shows an example of an evaluation circuit for evaluating a soft-start signal present at softstart terminal.

Figures 10 to 12    illustrate the function of the evaluation circuit by way of timing diagrams of signals occurring in the evaluation circuit.

Figure 13            illustrates the functionality of the drive circuit in active burst mode.

Figure 14            shows a further example of a drive circuit, with the drive circuit comprising a first select circuit.

Figure 15            shows an example of the select circuit.

Figures 16 and 17    illustrate the functionality of the select circuit of figure 15 by way of timing diagrams.

Figure 18            shows a further example of a drive circuit, with the drive circuit comprising a second select circuit.

Figures 19           shows a first example of the second select circuit.

Figure 20            shows a second example of the second select circuit.

Figures 21 to 23     illustrate the functionality of the second select circuit by way of timing diagrams.

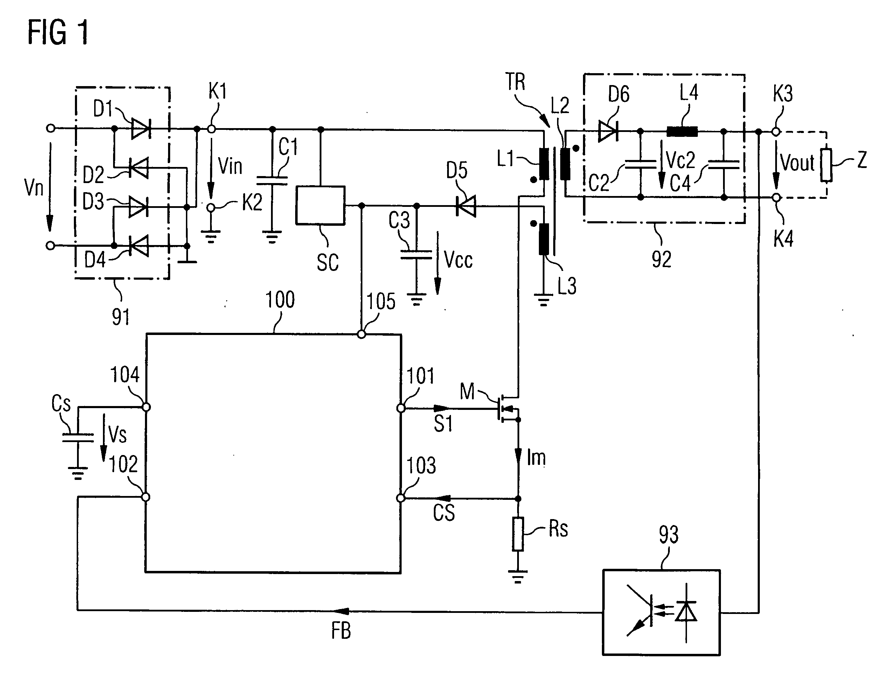

Figure 1 is an overview of a switching converter having a switch M and a drive circuit 100 for driving the switch M. For better understanding of the operation of the drive circuit 100, in addition to the drive circuit 100, Figure 1 shows other circuit components of the switching converter. These components are described in brief below.

The switching converter includes input terminals K1, K2 for applying a DC input voltage Vin. Input voltage Vin may be generated from an AC voltage- for example, a mains AC power supply voltage Vn - using a bridge rectifier 91 that has four diodes D1-D4 and an input capacitor connected to output terminals of the bridge rectifier. By way of example the converter shown in Figure 1 is a blocking converter (flyback converter) and comprises a transformer TR having a primary winding L1 and secondary winding L2, in which the primary winding L1 is connected in series to a series circuit comprising a load path of the switch M and a current sensing resistor Rs, with the switch being a MOSFET M in the example of figure 1. A series circuit comprising the primary winding L1, the switch M and the current sensing resistor Rs is connected between the input terminals K1, K2.

On the secondary side, the switching converter comprises a rectifier circuit 92, which is connected to the secondary winding L2, and has output terminals K3, K4 for providing an output voltage Vout. This output voltage Vout is used for supplying power to a load Z, which is illustrated by dashed lines. The rectifier circuit 92 according to the example comprises a diode D6, which is connected in series with the secondary winding L2, and a first capacitor C2 connected parallel to the series circuit of the secondary winding L2 and the diode D6. Connected in parallel to the first capacitor C2 is a LC element with an inductor L4 and a second capacitor C4; the output voltage Vout is picked off at this second capacitor C4.

To supply power to the drive circuit 100, the transformer TR has an auxiliary winding L3 connected inductively with the primary winding L1. The auxiliary winding L3 feeds a power supply capacitor C3 through a diode D5, where supply capacitor C3 provides a supply voltage Vcc for the drive circuit 100 via a supply terminal 105. The same terminal of the supply capacitor C3 that is connected to the supply terminal 105 of the drive circuit is connected to one of the input terminals K1 through a startup cell SC. The start up cell SC - which may be part of the drive circuit - charges supply capacitor C3 to thereby provide a supply voltage Vcc to the drive circuit 100 before switch M has been switched on for the first time, and to thereby enable the switching converter to start up.

Drive circuit 100 has an output terminal 101 for providing a drive signal S1 to a control terminal of the switch (M in figure 1). Switch M may be a MOSFET, where the control terminal of the MOSFET is its gate terminal. The function of the drive circuit 100 is to provide a pulse width-modulated drive signal S1 for the switch M in such a way that the output voltage Vout assumes an approximate constant value in normal operating state independently of the connected load Z. The input power of the switching converter, and consequently also the output voltage Vout is controlled using the duty cycle of the pulse width-modulated signal S1, which drives the switch M. During one drive period switch M is closed/switch on for an on-time and is opened/switched off for an off-time, where a ratio between the on-time and a duration of the drive period define the duty cycle. When the switch M is closed, the primary winding L1 stores energy supplied via the input terminals K1, K2, and, when the switch is subsequently opened, the stored energy is transmitted to the rectifier circuit 92 and the load Z via the secondary winding L2. The power uptake is the greater, the longer the switch M is activated during a drive period, i.e. the longer the on-time and the greater the duty cycle is.

The drive circuit 100 of Figure 1 is, for example, adapted to generate pulses of the drive signal S1 synchronously to an oscillating signal provided by an oscillator circuit. The on-time, and therefore the duty cycle, is set in response to a feedback signal FB that is provided to a feedback input 102 of the drive circuit, and a current measuring signal CS that is provided to a current measuring input 103 of the drive circuit. The feedback signal FB varies with the output voltage Vout, i.e. is dependent on the output voltage Vout, and is provided at the output of a feedback path which is connected to one of the output terminals K3, and which comprises a feedback circuit 93. Feedback circuit 93 may comprise, for example, a filter and a potential barrier. The potential barrier is used for potential insulation between the primary and secondary sides of the switching converter and may, for example, be an optocoupler, or a transformer. The filter may be a controller like a proportional or a proportional-integral controller. The feedback signal FB is fed to a second terminal 102 of the drive circuit 100.

In the example of figure 1 the current measuring signal CS is provided by current measuring resistor (shunt resistor) Rs and corresponds to the voltage across the resistor Rs. It should be noted that instead of shunt resistor Rs any other current measuring device providing a signal that is proportional to a current Im flowing through switch M may be used as well. The current measuring signal CS is fed to a third terminal 103 of the drive circuit 100. In the drive circuit 100 the current measuring signal CS, that is proportional to load current Im or a modified current measuring signal CS' derived from the current measuring signal CS may be used for generating the drive signal. The modified signal CS' may be obtained by

$$CS' = A + B \cdot CS \qquad (1)$$

where A and B are constant factors, for example A = 0,6V and B = 3,2 and CS is the measurement signal proportional to the current. The modified current measuring signal CS' is not directly proportional to the load current Im.

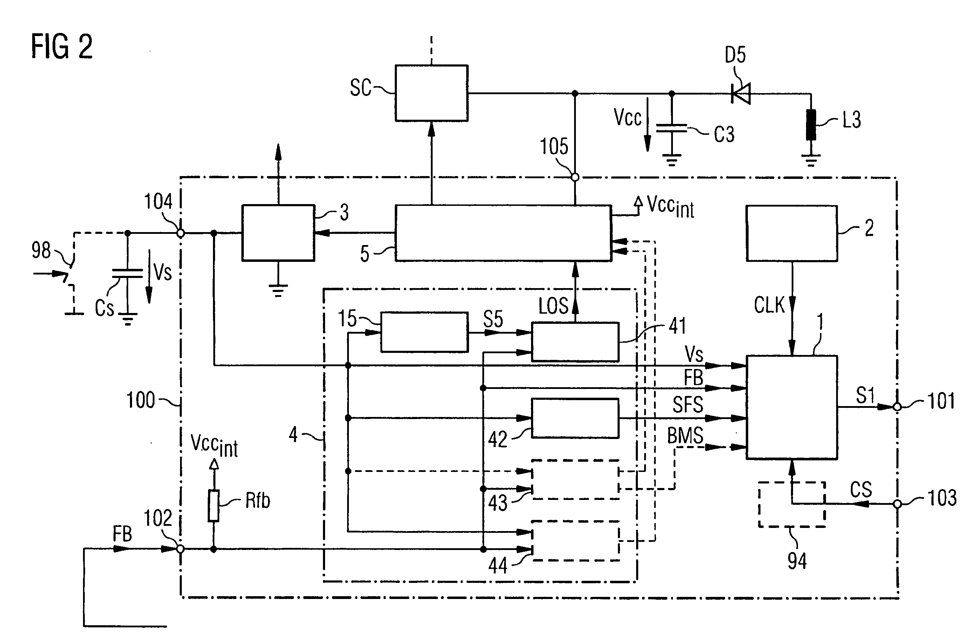

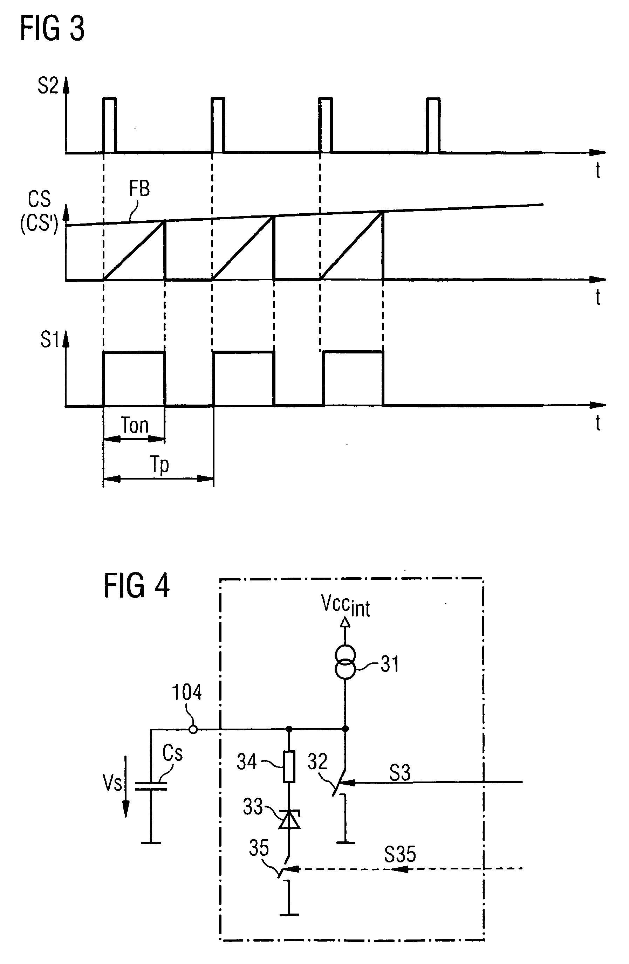

Figure 2 shows a first example of a drive circuit 100 for providing the drive signal S1. The drive circuit 100 comprises a signal generation circuit 1 receiving the feedback signal FB, and the current measuring signal CS, and comprising an oscillator 2 providing a clock signal CLK. Reference character 94 denotes an optional modification circuit for modifying the current measuring signal CS according to equation (1) and for providing the modified signal CS' to the signal generation circuit. The signal generation circuit 1 is adapted to generate the drive signal S1 during normal operation of the drive circuit 100 in such a way that switch M is activated with the clock of the oscillating signal S2, and is deactivated when the current measuring signal CS - which rises during the on-time - has risen to the value of the feedback signal FB. This operating principle of the signal generation circuit 1 is depicted in Figure 3 using the timing behavior of the oscillating signal S2, the feedback signal FB, and the current measuring signal CS. As can be seen, the on-time (activation period) Ton increases with the feedback signal FB rising. As a result, the duty cycle, which corresponds to the ratio of the on-time Ton and the period Tp given by the oscillator signal CLK, also rises.

For explanation purposes it is assumed that the feedback signal FB is generated by the feedback circuit 93 in such a way that the value of the feedback signal FB rises in inverse proportion to the output voltage Vout - or the mean value of the output voltage - in order to increase the on-time of the switch M when the output voltage Vout goes low. This increases the input power and counteracts further drops in the output voltage Vout, and therefore controls the output voltage to assume a defined reference value or setpoint. The feedback signal FB supplies information on the load state and, under large loads assumes, for example, a high value. Under low loads the feedback signal FB assumes, for example, a low value.

The drive circuit further comprises a power management circuit 5 connected to the supply terminal 105, and receiving the supply voltage Vcc. Power management circuit 5 is adapted to generate an internal supply voltage $Vcc_{int}$ from the external supply voltage Vcc that is fed to supply terminal 105, and to provide the internal supply voltage $Vcc_{int}$ to further components/function blocks within drive circuit 100. These components and function blocks will be explained below. In a manner not shown in detail power management circuit 100 is also adapted to selectively activate or deactivate some circuit blocks in the drive circuit 100.

When an input voltage Vin is applied to the input terminals K1, K2 for the first time - i.e. if the supply capacitor C3 is not charged and the external supply voltage is therefore zero - startup cell SC is activated and charges the supply capacitor C3. If the supply voltage Vcc reaches an on-threshold, say 15V, power management circuit 5 starts providing the internal supply voltage $Vcc_{int}$, which is 6.5V, for example, thereby enabling the drive circuit 100 to generate the drive signal S1 for switching on and off switch M, and deactivates startup cell SC. After deactivating startup cell SC auxiliary winding L3 and diode D5 ensure the power supply of the drive circuit 100 during such periods when switch M is switched on and off in a cyclic manner. When during operation of the drive circuit 100 the external supply voltage Vcc falls below an off-threshold, say 8.5V, power management circuit 5 deactivates those circuit parts in the drive circuit 100 that are responsible for generating the drive signal S1, thereby preventing switch M to be switched on.. In other words: Power management circuit 5 prevents the drive circuit 100 from switching on switch M . In a manner not shown in detail this may, for example, be achieved by switching off supply currents of those circuit blocks that are required for generating the drive signal S1, like signal generation circuit 1, for example. However, other circuit blocks may still be supplied in this operation state.

The external supply voltage Vcc may fall below the off-threshold if switch M is kept switched off after a fault condition has been detected, and if drive circuit 100 still consumes power because some circuit blocks are still activated. Different fault conditions/scenarios that may result in the drive circuit 100 to keep switch M switched off will be explained below. A power management circuit 5 having the described functionality is known, no further explanations are therefore necessary.

The drive circuit 100 of figure 2 has a soft-start functionality that helps limiting the current Im through switch M during a startup (soft-start) period of the converter. For this purpose drive circuit 100 has a soft-start terminal 104 for connecting a soft-start capacitor Cs thereto. During the soft-start period a voltage Vs across the soft-start capacitor determines a maximum peak current of the current Im through the switch M. Connected to the soft start terminal 104 is a charging/discharging circuit 3 that is controlled by the power management circuit 5, where the power management circuit 5 activates the charging/discharging circuit 3 to charge the soft-start capacitor Cs to a given maximum soft-start voltage, say 4.4V, if the external supply voltage Vcc rises above the on-threshold, and deactivates the charging/discharging circuit 3 to discharge the soft-start capacitor Cs if the external supply voltage Vcc falls below the off-threshold.

An example of a charging/discharging circuit 3 is shown in figure 4. The circuit comprises a current source 31 connected between a terminal for the internal reference voltage $Vcc_{int}$ and the soft-start terminal 104, and a switch 32 connected between the soft-start terminal 104 and a reference potential of the drive circuit, where this reference potential may be a primary side reference potential (for example ground). Switch 32 is opened and closed by a drive signal S3, that is generated by the power management circuit dependent on the external supply voltage Vcc, where the switch 32 is closed to discharge the capacitor Cs when the supply voltage Vcc falls below the off-threshold. In the circuit of figure 4 the current source starts to charge soft-start capacitor Cs as soon as the internal supply voltage $Vcc_{int}$ is switched on by the power management circuit 5, which is as soon as the supply voltage Vcc rises above the on-threshold. The slope of the voltage Vs across the capacitor Cs is dependent on the current supplied by the current source 31 and on the capacitance of the capacitor Cs, where - for a given current - the slope is the smaller, the larger the capacitance is. The slope of this voltage Vs may therefore be adjusted by selecting the capacitance of the soft-start capacitor. A Zener diode 33, that is connected in parallel to switch 32 has a clamping function and limits the voltage across the soft-start capacitor Cs and defines the maximum soft-start voltage, which will also be denoted as clamping voltage in the following. A resistor 34 that serves to limit an inverse current through the diode 33 may be connected in series to the diode 33.

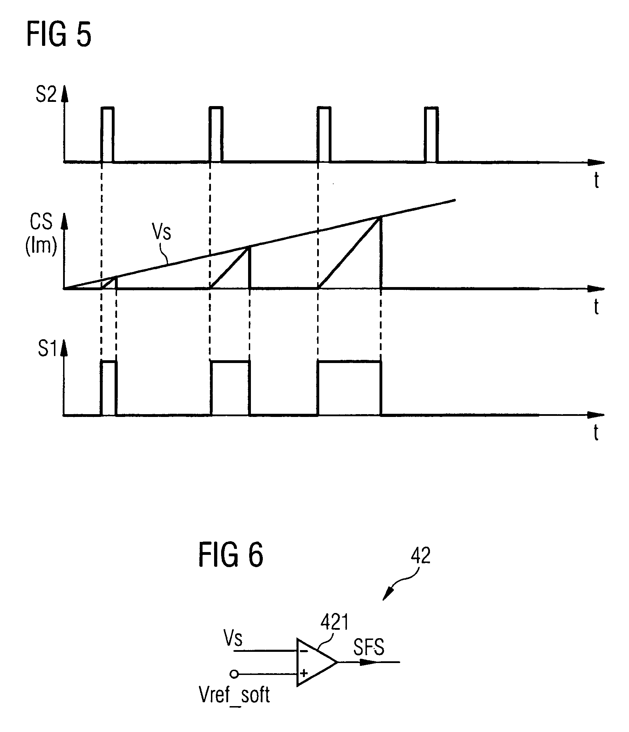

Referring to figure 5 the operation of the drive circuit in soft-start mode is different from the operation in the normal mode (see figure 3) in that the voltage Vs across the soft-start capacitor Cs limits the peak current of the current Im through switch M. Figure 5 shows the current measuring signal Cs, that is proportional to the current Im or that is a first order function of the current Im, dependent on the clock signal S2 and the soft-start voltage Vs over time, and shows the resulting drive signal S1. During soft-start the switch is switched on with every cycle of the clock signal CLK and is switched off each time the current measurement signal Cs reaches the soft-start voltage Vs, where the soft-start voltage Vs rises over time. Soft-start voltage Vs in this connection serves to limit the current Im through switch M, i.e. soft-start voltage Vs defines the maximum peak current during the soft-start period.

Drive circuit 100 comprises a control circuit 4 for controlling the different operation modes. Control circuit 4 comprises a soft-start control unit 42 for providing a soft-start signal SFS dependent on the soft-start voltage Vs. Soft-start signal SFS has either a first or a second signal level, where a first signal level indicates, that drive signal is in soft-start mode, and where the second signal level indicates that the drive signal is not in soft-start mode. A first level of soft-start signal SFS will be denoted as soft-start level in the following. For further explanations it may be assumed that the first signal level is a logic high level, and that the second signal level is a logic low level. Soft-start control unit 42 is adapted to provide a soft-start level of soft-start signal SFS if the soft-start voltage Vs is below a given threshold, say 4V. This threshold may be identical to the maximum soft-start voltage (clamping voltage) the soft-start capacitor Cs is charged to by charging/discharging circuit 3.

Referring to figure 6 soft-start control circuit 42 may comprises a comparator for comparing the soft-start voltage to the threshold Vref_soft and for generating the soft-start signal SFS depending on these two input signals. The soft-start signal SFS provided by the control circuit is fed to the signal generation circuit 1 for providing the drive signal.

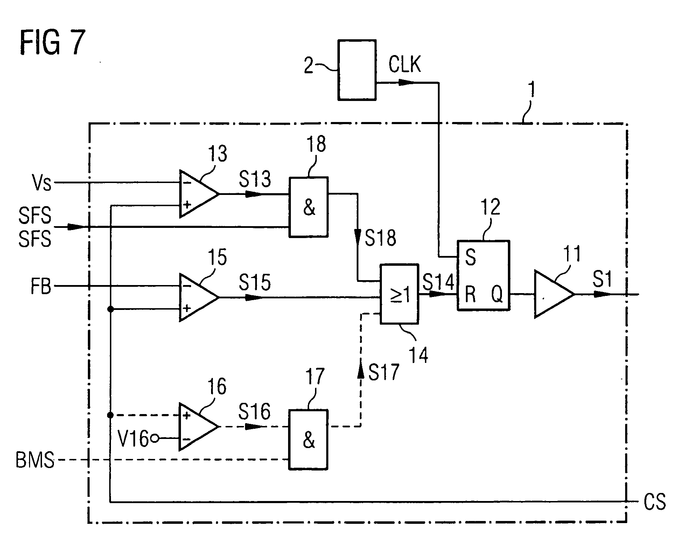

An example of a signal generation circuit 1 generating the drive signal S1 is shown in figure 7. This signal generation circuit 1 comprises an RS flip-flop 12, having a set input S receiving the clock signal CLK, and a reset input R. A frequency of the clock signal CLK is, for example, in the range of 100 kHz. Connected downstream to a non-inverting output Q of the flip-flop 12 is a driving circuit 11 that converts the logic signals at the output Q of the flip-flop to the drive signal S1. The drive signal S1 as generated by the driver 11 has a signal level that is suitable for driving the switch M. In the circuit 1 of figure 7 the flip-flop 12 is set synchronously to the clock signal CLK in order to switch on switch M. At the end of the on-period the flip-flop 12 is reset by a reset signal S14 applied to the reset input R of the flip-flop 12. This reset signal S14 is generated by an OR gate that receives two input signals S15, S18, where a first input signal S15 defines the duty cycle of drive signal S1 during normal operation mode, and where a second input signal defines the duty cycle of the drive signal during soft-start mode. The first signal S15 is generated by a comparator that receives current measuring signal CS and feedback signal FB and that resets flip-flop 12 in normal operation mode each time the current measuring signal reaches or rises above the feedback signal FB. An on-period of the drive signal S1 therefore starts with every cycle of the clock signal and ends if the current measuring signal reaches the feedback signal, as has been explained with reference to figure 2. The second signal S18 is generated by an AND gate 18 that receives soft-start signal SFS and the output signal of a second comparator 13 that receives the soft-start voltage Vs and the current measuring signal CS. The second signal S18 may only then assume a signal level (a logic high level in the example) that is suitable to reset flip-flop 12 if the soft-start signal SFS has a soft-start level, i.e. during the soft-start period. During this period flip-flop 12 is reset each time the current measuring signal CS reaches or rises above the soft-start voltage Vs.

Referring to figure 2 feedback input 102 via a pull-up resistor Rfb is connected to a terminal for the internal supply voltage $Vcc_{int}$. During startup of the converter the output voltage Vout is low, the feedback signal FB is therefore high and is limited to the internal supply voltage $VCC_{int}$. In the soft-start mode, i.e. during startup, the feedback signal FB is higher than the soft-start voltage Vs, the current measuring signal CS therefore reaches the soft-start voltage Vs before it may reach the feedback signal FB. The on-period of the drive signal S1 is therefore defined by the second signal S18 in the soft-start mode.

Further, the drive circuit of figure 2 has a latch-off functionality that is controlled by a latch-off control circuit 41, which is part of the control circuit. The drive circuit 100 enters the latch-off mode under dangerous conditions that may damage the drive circuit if not switched off immediately. In latch-off mode the power management circuit 5 switches off the internal power supply voltage $Vcc_{int}$ and keeps the external supply voltage Vcc in a voltage range that is above a latch-off reset threshold. In latch-off mode the power management circuit by activating the startup cell charges the power supply capacitor to a given upper threshold that is below the on threshold. The startup cell is deactivated if the voltage Vcc reaches the upper threshold. The supply voltage Vcc is then allowed to decrease to a lower threshold, that is above the latch-off reset threshold, where the startup cell is activated if the supply voltage reaches the lower threshold. After the startup cell SC has been deactivated the supply voltage Vcc falls due to the power consumption of the power management circuit 5 itself. This power consumption is necessary to keep the drive circuit 100 in latch-off mode.

The drive circuit 100 leaves the latch-off mode only if the supply voltage falls below the latch-off reset threshold, say 6V. This may only be achieved by disconnecting the converter from the input voltage. A restart is therefore only possible after the converter has been disconnected from the mains power supply and after again connecting the converter to the mains power supply. A power management system having a latch-off functionality is known, further explanations are therefore not required.

Power management circuit 5 enters the latch-off mode dependent on a latch-off signal LOS generated by the latch-off control circuit 41. Latch-off signal LOS has either a first or a second signal level, where a first signal level indicates, that the drive circuit 100 is in latch-off mode, and where the second signal level indicates that the drive circuit is not in latch-off mode. A first level of latch-off signal will be denoted as latch-off level in the following. For further explanations it may be assumed that the first signal level is a logic high level, and that the second signal level is a logic low level. According to an example the drive circuit 100 enters the latch-off mode if the external supply voltage is above a first latch-off threshold, say 21V, and if the feedback signal is above a second latch-off threshold, say 4.8V, or the drive circuit 100 enters the latch-off mode if the current through switch M rises above a given threshold, i.e. if the current measuring signal CS rising above a third latch-off threshold, say 1.68V.

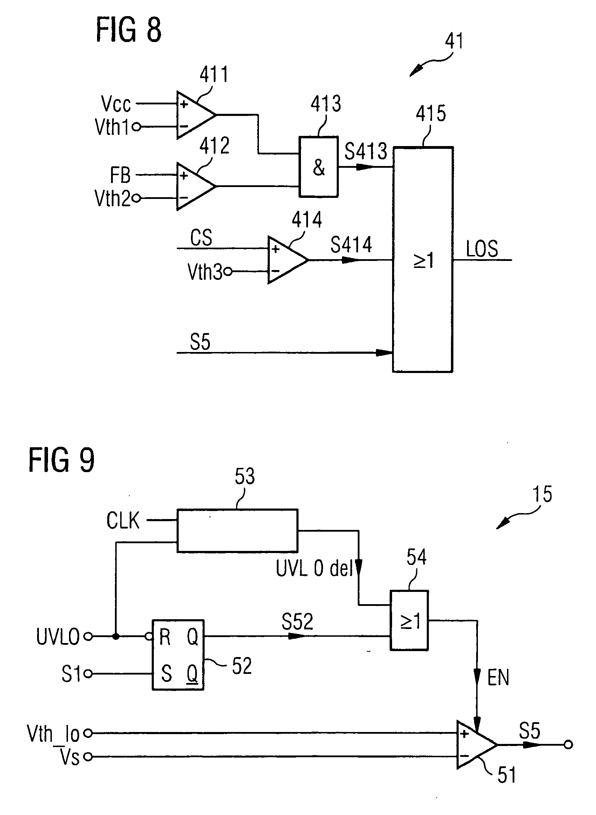

An example of a latch-off control circuit 41 generating the latch-off signal LOS in the manner described above is shown in figure 8. This latch-off control circuit 41 comprises a first comparator 411 for comparing the external reference voltage Vcc to the first latch-off threshold Vth1, a second comparator 412 for comparing the feedback signal FB to the second latch-off threshold Vth2, and an AND gate 413 receiving output signals of the first and second comparator 411, 412 and providing a first latch-off signal S413. The latch-off control circuit 41 further comprises a third comparator 414 for comparing the current measuring signal CS to the third latch-off threshold Vth3 and for providing a second latch-off signal S414. First and second latch-off signals are received by an OR gate 415 that provides the latch-off signal LOS, where the latch-off signal LOS assumes a latch-off level, if one the first and second latch-off signals S413, S414 assumes a latch-off level. It should be noted, that for the sake of clarity feeding the external supply voltage Vcc and the current measuring signals CS to the latch-off control circuit 41 is not shown in the overview of figure 2.

Additionally, OR gate 415 receives an external latch-off signal S5 provided by an evaluation circuit 15 that evaluates the soft-start voltage Vs at soft-start input 104. Using evaluation circuit 15 the drive circuit 100 may be forced to enter latch-off mode by externally applying a latch-off signal to the soft-start input 104. For the following explanation it may be assumed that the signal applied to the soft start input 104 for forcing the drive circuit into the latch-off mode is generated by a switch 98 connected between the soft-start input 104 and reference potential, and being control by a control signal S98 . If switch 98 is closed soft-start voltage Vs is kept zero, if soft-start capacitor Cs has not been charged, yet, or soft-start voltage Vs decreases to zero by discharging soft-start capacitor.

An example of the evaluation circuit 15 evaluating the soft-start voltage is shown in figure 9. The circuit comprises a comparator that compares the soft-start voltage Vs to a latch-off threshold Vth_lo, say 0.3V, and provides the external latch-off signal S5 fed to the latch-off control circuit 41. In general external latch-off signal S5 takes on a latch-off level if soft-start signal Vs falls below the latch-off threshold Vth_lo. However, there are situations during operation of the drive 100 circuit when the soft-start voltage Vs is below the latch-off Vth_lo without the external switch 98 being closed. One of these situations is startup. In order to prevent the drive circuit 100 to enter latch-off under these conditions the evaluation circuit 15 comprises an enable circuit providing an enable signal EN to the comparator 51. Latch-off signal S5 may only assume a latch-off level if comparator 51 is enabled, i.e. if enable signal EN has an enable level, which, for example, is a high level.

The enable circuit comprises a flip-flop 52 receiving drive signal S1 at its set input and an undervoltage signal UVLO at its inverting reset input. An output signal of flip-flop 52 is fed to an input of an OR gate that provides the enable signal. Undervoltage signal UVLO is provided by the power management circuit 5 and indicates if the drive circuit 100 is enabled for generating pulses of drive signal S1. As explained before drive circuit 100 is enabled for generating pulses of drive signal S1 during startup if the external supply voltage Vcc reaches the on-threshold and is disabled from generating pulses if the supply voltage Vcc subsequently falls below the off-threshold. For purposes of further explanation it may be assumed that undervoltage signal UVLO has a logic high level if the drive circuit 100 is enabled, and has a logic low level if the drive circuit 100 is disabled.

Enable circuit further comprises a delay element 53 receiving the undervoltage signal UVLO and providing a delayed version of the undervoltage signal UVLO at its output., An output signal UVLOdel of the delay element 53 is provided to the OR gate 54. A delay of the delay element 53 may be adjusted using clock signal CLK, and is, for example, 1ms..

In the enable circuit of figure 9 comparator 51 is enabled with a first pulse of drive signal S1, or is enabled after a given delay time has elapsed after undervoltage signal UVLO has reached its high level. In both cases it is a safe assumption that soft-start voltage Vs is not below latch-off threshold Vth_lo under usual operation conditions at the time when comparator 51 is enabled.

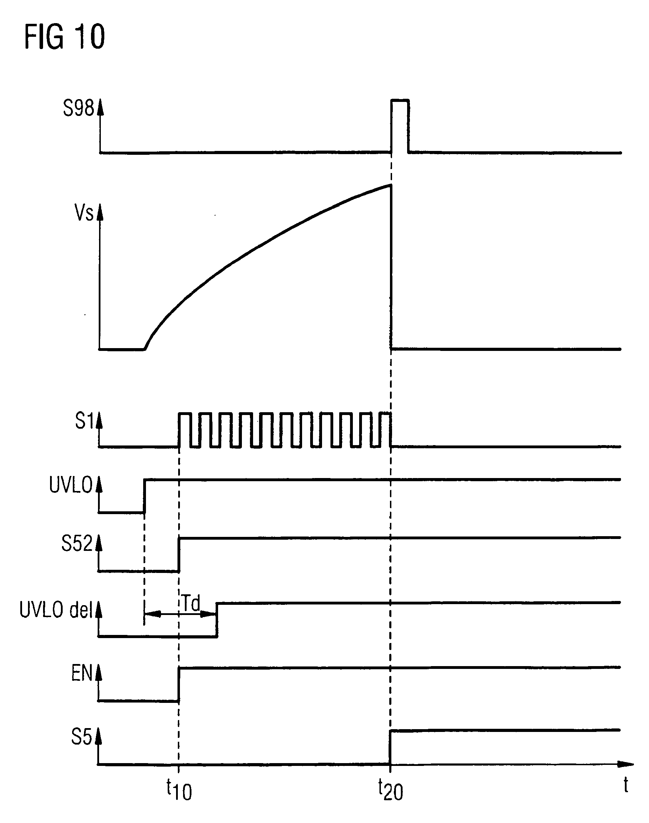

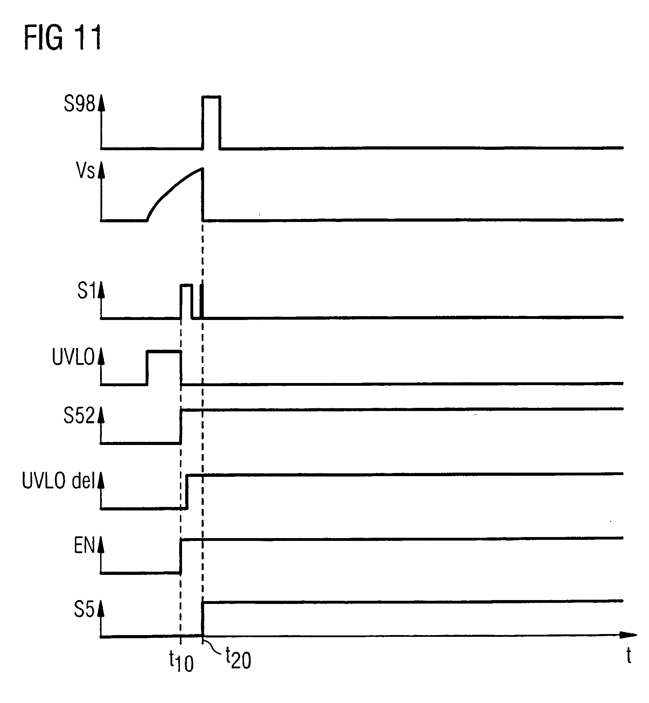

The functionality of evaluation circuit 15 will now be explained with reference to figures 10 to 12 in which a control signal S98 for external switch 98 (see figure 2), soft-start-voltage Vs, drive signal S1, undervoltage signal UVLO, the output signal S52 of flip-flop 52, the delayed version UVLOdel of undervoltage signal UVLO, the enable signal EN and the latch-off signal S5 are shown over time for different scenarios. In the example an on-level of control signal S98 is a high level, while an off-level is a low level. In the scenarios according to figures 10 and 11 an on-level of control signal S98 occurs after a first pulse of drive signal S1. In these scenarios comparator 51 is enabled at the time t10 of the first pulse of drive signal S1. A latch-off level of latch-off signal S5 is generated at the time when the pulse of control signal S98 occurs (time t20 in figures 10 and 11). The undervoltage signal UVLO has no influence on enabling the comparator 51 in these cases; enabling the comparator is governed by the drive signal S1, only. It should be noted in this connection that flip-flop 52 is reset if the undervoltage signal UVLO assumes a logic low level.

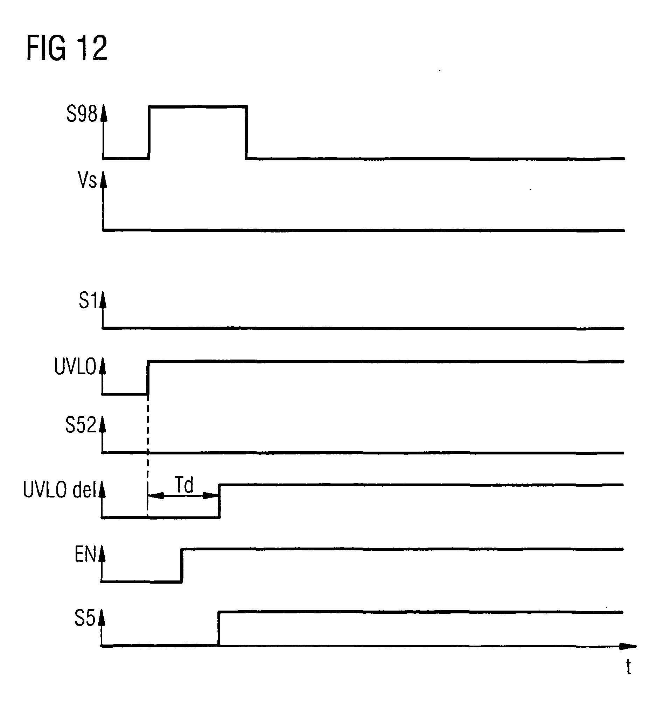

In the scenario of figure 12 a pulse having an on-level of control signal S98 is already present before soft-start capacitor Cs is charged. Control signal S98 in this case keeps switch 98 closed and, consequently, keeps the potential at soft-start terminal 104 low. In this case no pulses of drive signal S1 are generated. Enabling the comparator 51 is therefore governed by undervoltage signal UVLO. Comparator 51 is enabled in this case after a delay time Td has elapsed after a rising edge of an undervoltage signal UVLO. Since in this scenario of figure 12 control signal S98 already has a high level when comparator 51 is enabled a latch-off level of latch-off signal S52 is immediately generated when comparator 51 is enabled.

In the drive circuit 100 of figure 2 soft-start terminal 104 has two functions: applying a soft-start signal, which is used for limiting a maximum peak current during startup; and applying an external latch-off signal, which enables the user to force drive circuit 100 to enter latch-off mode.

Optionally drive circuit 100 may have an active burst mode and/or an auto restart functionality, where burst mode is controlled by a burst mode control circuit (43 in figure 2), and where auto restart is controlled by an auto-restart control circuit (44 in figure 2).

Burst mode is entered under low load conditions. The presence of such low load conditions is assumed if the feedback signal FB falls below a lower burst mode threshold Vth_bl, say 1.32V. Burst mode is left if the feedback signal FB during the burst mode rises above an upper burst mode threshold Vth_bu, say 4.8V, indicating that the load has returned to "normal" load conditions.

Burst mode control circuit 43 generates a burst mode signal BMS that is provided to signal generation circuit 1 and that may assume either a first signal level or a second signal level. The first signal level indicates, that drive circuit is in burst mode, and the second signal level indicates that the drive signal is not in burst mode. A first level of burst mode signal BMS will be denoted as burst mode level in the following. For further explanations it may be assumed that the burst mode level is a logic high level, and that the second signal level is a logic low level.

For supporting burst mode the signal generation circuit 1 requires additional components that are depicted in dashed lines in figure 7. These additional components are a third comparator that receives the current measuring signal CS and a burst mode current threshold signal V16. An output signal S16 of the comparator is together with the burst mode signal BMS fed to an AND gate 17, where an output signal S17 of the AND gate 17 is fed to the OR gate 14 as a third reset signal. The value, say 0.25V, of the burst mode current threshold signal V16 is lower than that of the feedback signal FB in burst mode and effects very short on-times in burst mode in that, after switching on the switch M, the flip-flop 12 is reset as early as when the current measuring signal CS has risen to the low reference value V16. Resetting of the flip-flop 12 through the comparator signal S16 is prevented outside burst mode by the burst mode signal BMS going low, which causes the output signal S17 of the AND gate to permanently go low.

During burst mode there are two different operation states: a burst-on state, and a burst-off state. In burst-on state switch M is driven as explained before by switching the switch M on with every cycle of the clock signal, and by switching the switch off if the current measuring signal CS reaches the burst mode current threshold signal V16. In burst-off state switch M is permanently switched off. Burst-on and burst-off state are controlled by burst control circuit 43 via the power management unit. In burst-off mode burst mode control circuit 43 forces the power management circuit 5 to deactivate the drive circuit 100, thereby preventing drive pulses of the drive signal S1 to be generated. Deactivating the drive circuit 100 may be achieved by, for example, switching off the current of signal generation circuit 1 and/or other circuit blocks inside drive circuit 100 that are responsible for drive signal S1 to be generated.

In burst-off mode the output voltage Vout decreases because there is still power consumption of the load but no power is transferred from the primary to the secondary side of the converter. Consequently, feedback signal FB rises during burst-off mode. When entering the burst mode the drive circuit 100 first enters the burst-off mode in order to switch the switch M off. From burst-off mode the drive circuit passes into burst-on mode if the feedback signal rises to a burst-on threshold, say 4.0V. During burst-on mode the output voltage rises if there are still low load conditions, where the feedback signal FB decreases. From burst-on mode the drive circuit then again passes into burst-off if the feedback signal FB falls to a burst-off threshold, say 3.4V. Burst-on and burst-off threshold are within a threshold range given by lower and upper burst mode threshold.

In an embodiment the drive circuit does not immediately enter the burst mode if the feedback signal FB falls below the lower burst mode threshold Vth_bl but, after the feedback signal has fallen below the lower burst mode threshold, waits for a given time, which will be denoted as blanking time in the following. In this case drive circuit 100 enters burst mode only if, after the blanking time has elapsed, the feedback signal FB is still below the lower burst mode threshold.

For generating the blanking time soft-start capacitor Cs may be used in that soft-start capacitor Cs is charged from the clamping voltage Vth_cl to a higher voltage, which will be denoted as blanking time threshold Vth_bt. Blanking time starts with the beginning of charging soft-start capacitor Cs and ends when the voltage Vs across soft start capacitor Cs reaches the blanking time threshold Vth_bt, which, for example, is 5.4V. For charging the soft-start capacitor Cs from the clamping voltage to the blanking time threshold Vth_bt the clamping function in the charging/discharging circuit may be deactivated using a switch that, referring to figure 4, is connected in series to Zener diode 33, and that is controlled by a control circuit S35 generated by the burst mode control circuit. For the sake of clarity feeding the control signal S35 to the charging/discharging circuit 3 is not shown in figure 2.

Switch 35 of the charging/discharging circuit 3 is opened to deactivate the clamping circuit 33 if the feedback signal FB falls below the lower burst mode. Drive circuit 100 then dependent on the feedback signal FB and the voltage Vs across the soft-start capacitor enters the burst mode if the voltage across the soft-start capacitor Cs reaches the blanking time threshold Vth_bt, and if the feedback signal FB is still below the lower burst mode threshold. In this embodiment the burst mode control circuit, besides the feedback signal FB, receives the voltage Vs across the soft-start capacitor, which is depicted in dashed lines ion figure 2.

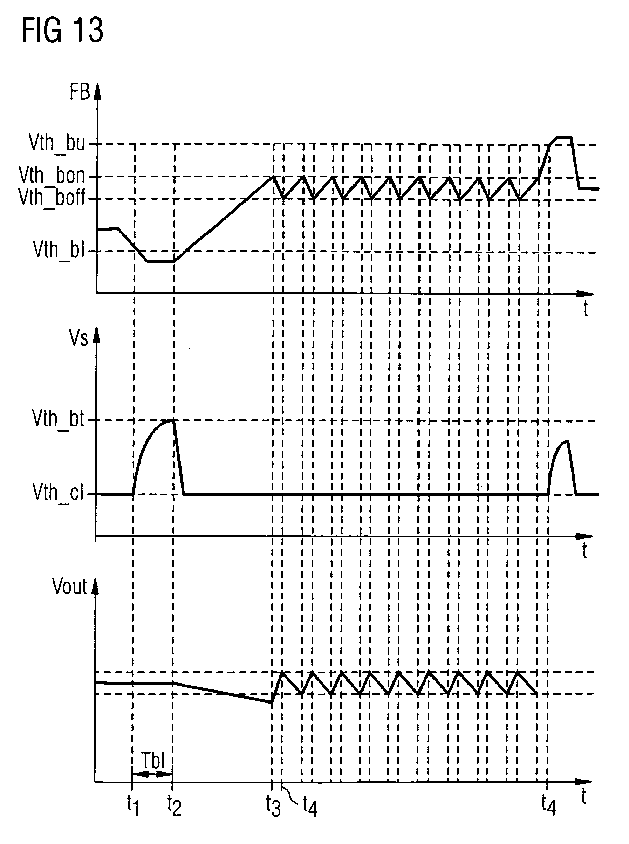

Operation of the drive circuit in active burst mode will shortly be explained with reference to figure 13 in which the feedback signal FB, the soft-start voltage Vs and the output voltage Vout are shown over time. At time t1 the feedback signal FB falls below the lower burst mode threshold Vth_bl. At this time t1 charging of the soft-start capacitor Cs starts by deactivating the clamping circuit. Vth_cl in figure 13 denotes the clamping voltage. At time t2 soft-start voltage Vs reaches the blanking time threshold Vth_bt, while the feedback signal FB - for example due to low load conditions - is still below the lower burst mode threshold. At this time drive circuit 100 enters active burst mode by first entering burst-off mode. The time period between time t1 and time t2 is the blanking time that is denoted by Tbl in figure 13. During burst-off mode the feedback signal FB rises because of a decreasing output voltage. At time t3 the feedback signal FB reaches burst-on threshold Vth_bon, with the drive circuit then passing into burst-on mode. In burst-on mode feedback signal FB decreases because of a rising output voltage At time t4 feedback signal FB reaches or falls below burst-off threshold Vth_boff, with the driving circuit then again passing into burst-off mode. The drive circuit 100 leaves burst mode if the feedback signal FB rises above upper burst-mode threshold Vth_bu, which is at time t4 in figure 13. The clamping circuit of the charging/discharging circuit 3 is again activated if the feedback signal FB rises above the lower burst mode threshold Vth_bl thereby causing the soft-start voltage to return to the clamping voltage Vth_cl.

Auto restart functionality helps to protect the drive circuit 100 and/or the converter in case of high load conditions or in case of the feedback loop being interrupted. In both cases feedback signal FB rises to large signal values. Auto restart mode is entered if the feedback signal FB rises to an auto restart threshold, say 4.8V. Auto restart mode, referring to figure 2, is controlled by auto restart control circuit 44 that receives the feedback signal FB. If the feedback signal FB rises above the auto restart voltage control circuit 44 forces the power management circuit 5 to disable drive circuit 100 from generating drive pulses of the drive signal S1, thereby preventing any further drive pulses to be generated. After auto restart mode has been entered the external supply voltage Vcc decreases because there is still power consumption of the drive circuit 100, in particular the power management circuit, but supply capacitor C3 is not re-charged via auxiliary winding. If the supply voltage Vcc falls below a lower threshold that may be identical to the off-threshold power management circuit 5 activates startup cell SC to charge supply capacitor C3, where a new soft-start cycle starts if the supply voltage reaches the on-threshold. In contrast to latch-off mode in auto restart mode the drive circuit is always restarted, where under fault conditions like an open feedback loop the auto restart cycles may be repeated as long as the fault condition is present or until latch-off conditions occur.

In an embodiment the drive circuit does not immediately enter the auto restart threshold if the feedback signal FB rises above the auto restart mode but, after the feedback signal has risen above the auto restart threshold waits for the blanking time. The blanking time may be generated in the same way as in active burst mode, where the auto restart control circuit 44 deactivates the clamping circuit in the charging/discharging circuit 3 if the feedback signal FB rises above the auto restart threshold. Auto restart mode is entered if the soft-start voltage Vs has reached the blanking time threshold Vth_bt, and if the feedback signal FB is still above the auto restart threshold. In this embodiment auto restart control circuit 44 - besides the feedback signal FB - receives the soft-start voltage Vs.

In the drive circuit 100 as explained above soft-start terminal 104 is used - besides to connecting soft-start capacitor Cs thereto - to provide additional external information to drive circuit 100. In the drive circuit 100 explained above this additional external information is a latch-off information that is used in the drive circuit 100 to force the drive circuit 100 to enter latch-off mode.

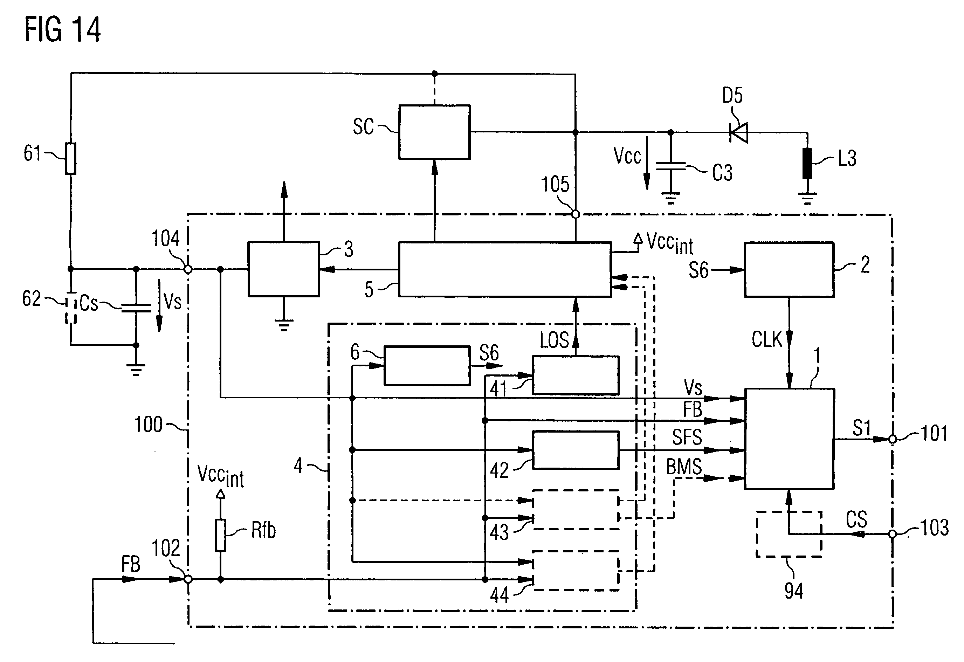

Figure 14 shows an example of a further drive circuit 100 that uses soft-start terminal 104 to provide external information to drive circuit 100. In the drive circuit of figure 14 this additional information is a select information which is used in the drive circuit 100 to select one of two different options. Drive circuit 100 comprises a select circuit 6 which is connected to soft-start terminal 104, and which provides a select signal S6 dependent on the signal present at soft-start terminal 104. Select signal S6 is used in the drive circuit 100 to select one of two given options. Select signal S6 may, for example, be used to adjust the frequency of the clock signal CLK generated by oscillator 2 to a first or a to a second frequency value. Dependent on select signal S6 drive circuit 100 may then be driven, for example, in full frequency mode or in half frequency mode, where the frequency of clock signal CLK in half frequency mode is half the frequency of the frequency in full frequency mode. In another example select signal S6 may be used to activate (enable) or deactivate (disable) auto restart control circuit 44, where drive circuit 100 is prevented from entering auto restart mode if auto restart control circuit 44 is deactivated. In another example select signal S6 may be used to activate or deactivate latch-off control circuit 41, where drive circuit 100 is prevented from entering latch-off mode if latch-off control circuit 41 is deactivated.

It should be noted that the general functionality of drive circuit 100 of figure 14 is identical to the general functionality of drive circuit 2 of figure 2. Circuit components of the drive circuit of figure 14 that have the same reference numbers as circuit components of the drive circuit of figure 2 therefore have the same functionality. With regard to this functionality reference is made to figures 2 to 8 and the corresponding description. The latch-off circuit 41 of the drive circuit 100 of figure 14 is different from the latch-off control circuit 41 of figure 2 only in that the circuit 41 of figure 14 does not receive external latch-off signal S5.

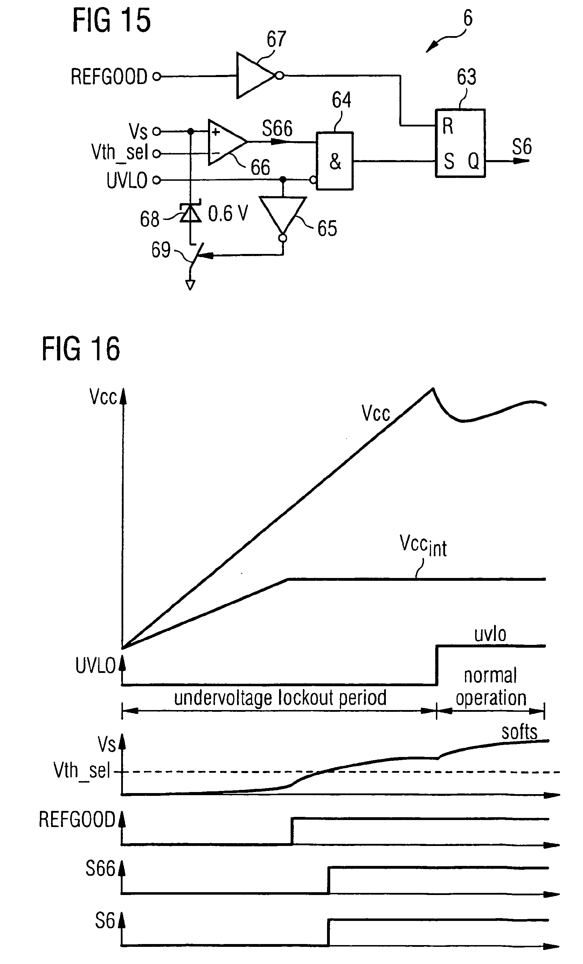

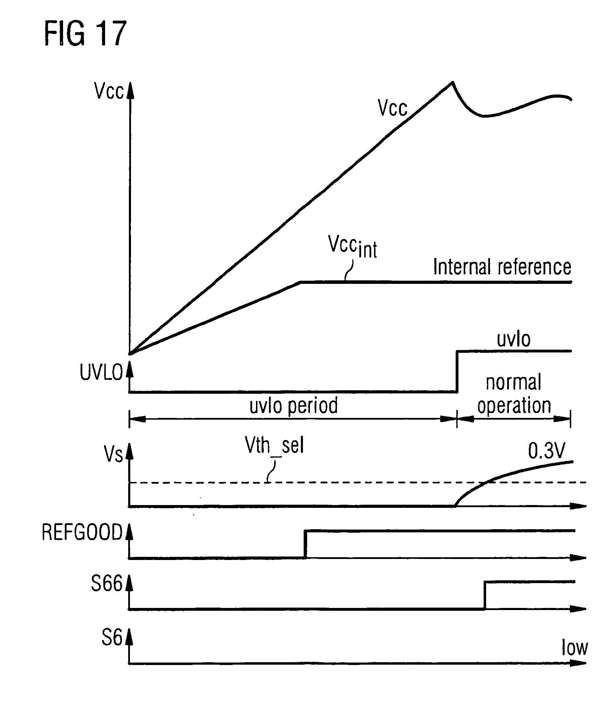

The functionality of select circuit 6 will now be explained with reference to figures 15 to 17, where figure 15 shows an example of select circuit 6, and where figures 16 and 17 show signals occurring in the select circuit 6 over time.

Select circuit 6 is adapted to evaluate the voltage Vs present at soft-start terminal 104 during the so-called undervoltage lockout period. This is the period, when undervoltage signal UVLO provided by power management circuit 5 has a signal level that indicates that drive circuit 100 is not (yet) activated for generating drive pulses of drive signal 100. During this period soft-start capacitor Cs is not charged by charging/discharging circuit 3. The voltage Vs across soft-start capacitor Cs would therefore be zero during this period, if no additional measures were taken. The time period when undervoltage signal UVLO has a signal level indicating that drive circuit 100 is deactivated from generating drive pulses will be referred to as undervoltage lockout period in the following. During the undervoltage lockout period startup cell (SC in figure 14) is activated, and causes the external supply voltage Vcc to rise during this period. Together with the external supply voltage Vcc the internal supply voltage Vcc$_{int}$ rises during the undervoltage lockout period until it reaches its desired value. Even though internal voltage Vcc$_{int}$ may have reached its desired value earlier drive circuit 100 is disabled from generating drive pulses until the end of undervoltage lockout period.

The drive circuit of figure 14 makes use of the idea that by connecting soft-start terminal 104 to the node for external supply voltage Vcc the potential at soft-start terminal 104 during undervoltage lockout period can be set to a value that is different from zero. Select circuit 6 is adapted to compare the voltage Vs at soft-start terminal 104 during the undervoltage lockout period with a threshold value and to generate select signal S6 dependent on the result of this comparison.

In the drive circuit 100 of figure 14 soft-start terminal 104 is connected to the node for external supply potential Vcc via first resistor 61. Instead of connecting soft-start terminal 104 to the node for external supply voltage Vcc soft-start terminal 104 may either be connected to the feedback terminal 102. This makes use of the idea that feedback signal FB assumes a high signal level during the undervoltage lockout period as soon as the internal supply voltage Vcc$_{int}$ is present. Feedback signal FB has a high signal level during undervoltage lockout because the output voltage Vout is zero or has a low voltage level during this period. This is because no drive pulses of drive signal S1 are generated during undervoltage lockout.

The select circuit 6 according to figure 15 comprises a comparator 66 receiving the soft-start voltage Vs and a select threshold Vth_sel, say 0,3V, and provides a comparator signal S66 that is dependent on the values of the soft-start voltage Vs relative to the select threshold Vth_sel. For explanation purposes it may be assumed that comparator signal S66 assumes a high signal level if soft-start voltage Vs is higher than the select threshold Vth_sel. A high signal level of comparator signal S66 during the undervoltage lockout period indicates that soft-start terminal is either connected to the terminal 105 for the external supply potential or to the feedback terminal 102.

An AND gate 64 of select circuit receives output signal S66 of comparator 66 on a first input, and undervoltage signal UVLO on a second inverting input. Output signal S64 of AND gate 64 is fed to a set input S of a flip-flop 63, where flip-flop 63 provides the select signal S6. In this select circuit 6 Flip-Flop 63 is set, if soft-start signal Vs rises above select threshold Vth_sel during undervoltage lockout period UVLO. Flip-flop 63 is reset before the internal supply voltage $Vcc_{int}$ reaches its desired operation value that is required for ensuring a proper operation of the circuit components in the drive circuit 100, and therefore for ensuring a proper operation of select circuit 6. In this connection a voltage indicator signal REFGOOD is used that indicates if the internal supply voltage $Vcc_{int}$ has reached its desired operation value. Indicator signal REFGOOD may, for example, be generated by comparing the internal supply voltage $Vcc_{int}$ to a given threshold value. In the example indicator signal REFGOOD has a high signal level if the internal supply voltage $Vcc_{int}$ has reached its desired operation value, and else has a low signal level. In the circuit of figure 15 an inverter 67 receives the indicator signal REFGOOD and provides an output signal S67 for resetting flip-flop 63. In the example flip-flop 63 is reset each time the indicator signal REFGOOD has a low signal level.

A clamping circuit that comprises a Zener diode 68 and a switch 69 connected in series to the diode 68 is an option and serves to clamp soft-start circuit Vs to a given clamping voltage, say 0,6V, during the undervoltage lockout period. Switch 69 in this clamping circuit is activated via an inverter 65 by undervoltage signal UVLO.

The function of select circuit 6 will be apparent from figure 16 that shows the soft-start voltage Vs, the output signal S66 of comparator 66, the indicator signal REFGOOD, the undervoltage signal UVLO, and the select signal S6 over time. Figure 16 shows these signals for the cases in which the soft-start terminal 104 is externally connected to either the node for external supply voltage Vcc or to the feedback terminal 102. Due to the soft start terminal 104 being connected to supply terminal 105 or to feedback terminal 102 soft start-voltage Vs starts rising before the end of the undervoltage lockout period has been reached. Soft-start voltage Vs reaches the select threshold Vth_sel before the end of the undervoltage lockout has been reached, thereby causing AND gate 64 to set flip-flop 63, and thereby causing select signal S6 to assume a high signal level that indicates the first option to be chosen in the drive circuit.

If a clamping circuit is used in the select circuit 6 soft-start voltage Vs is clamped to a given clamping voltage. A further increase in the soft-start voltage Vs after the end of the undervoltage lockout period results from the normal soft-start process as explained above.

Figure 17 shows the soft-start voltage Vs, the output signal S66 of comparator 66, the indicator signal REFGOOD, the undervoltage signal UVLO, and the select signal S6 for the case in which soft-start terminal 104 is not connected to any of the supply or feedback terminals 105, 104. In this case soft-start voltage Vs is zero until the end of the undervoltage lockout period has been reached. Select signal S6 is therefore kept low indicating the second option to be chosen in drive circuit 100. Soft-start voltage Vs rises after the end of the undervoltage lockout period due the normal soft start process.

Summarizing the above, by either connecting the soft-start terminal 104 to the supply or feedback terminal 105, 102, or by not connecting the soft-start terminal 104 to one of these terminals during undervoltage lockout a one bit information can be provided to the drive circuit 100 via the same input terminal that is used for soft-start purposes. No additional ports/terminals are therefore required for providing this information to the drive circuit.

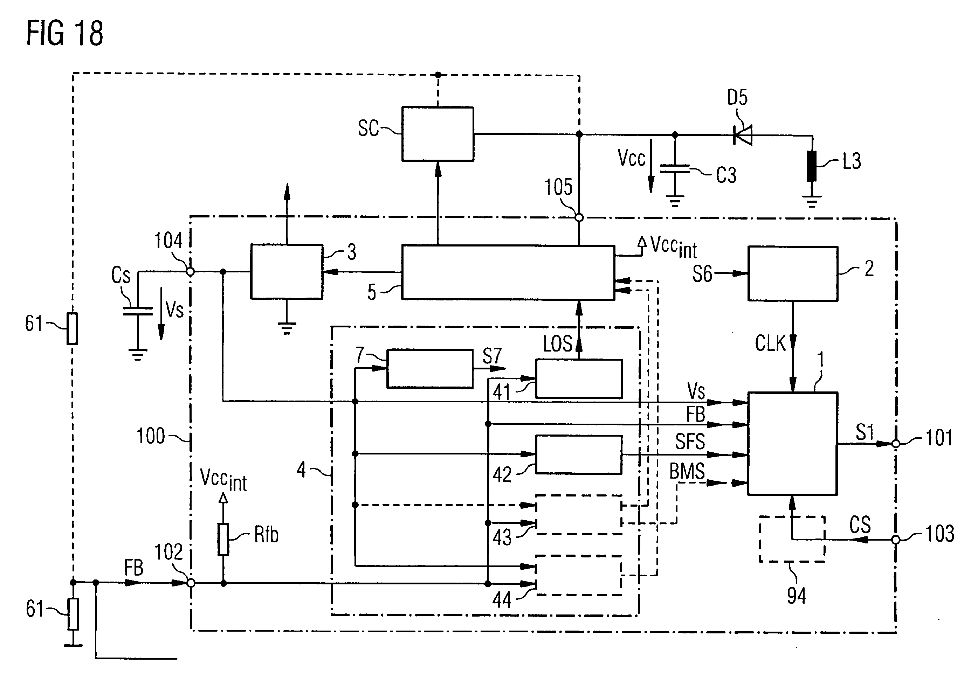

Another example of a drive circuit 100 having selection functionality is shown in figure 18. In this drive circuit 100 a select circuit 7 is connected to the feedback terminal 102 and is adapted to evaluate the potential at feedback terminal 102 during the undervoltage lockout period. Select circuit 7 is further adapted to compare the potential at feedback terminal 102 to the internal supply voltage $Vcc_{int}$.

The internal supply voltage $Vcc_{int}$ that, via feedback resistor Rfb, is provided to the feedback terminal 102 defines a maximum value for the feedback signal. Unless additional measures are taken feedback signal FB assumes this maximum value during the undervoltage lockout period. This is the case because the output voltage Vout is zero during this period.

The drive circuit in figure 18 comprises means for connecting feedback terminal 102 to a first terminal that has always a lower potential than the internal supply voltage $Vcc_{int}$. In figure 18 the means for connecting the feedback terminal 102 to the first terminal is a resistor 61.

By connecting the feedback terminal 102 to the first terminal, or by not connecting the feedback terminal to one of these terminals a one bit information can be provided to the drive circuit via the feedback terminal. Based on this information select circuit 7 provides a select signal that may comprises two different signal levels and that is used in the drive circuit 100 for selecting one of two different options. With regard to the different options (half or full frequency mode,...) that may be selected in the drive circuit 100 reference is made to the description of figure 14.

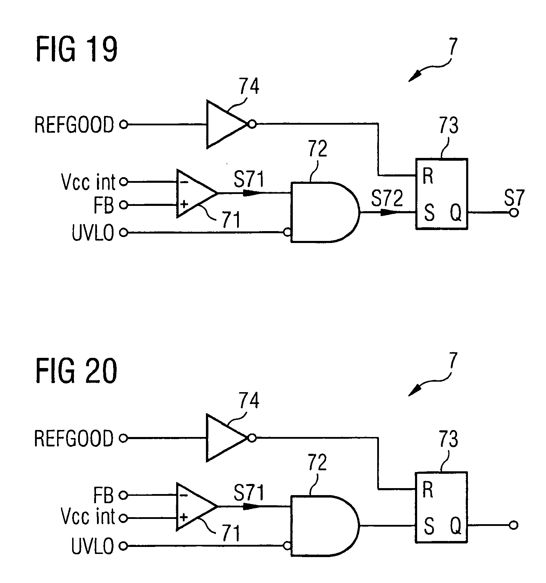

Figure 19 shows a first example of a select circuit for evaluating the feedback signal FB during the undervoltage lockout period. It should be mentioned in this connection that same reference signs in figures 19 to 23 and figures 14 to 18 denote the same signals.

The select circuit 7 comprises a comparator 71 for comparing the feedback signal FB to the internal supply voltage, and for providing an output signal S71 that is dependent on the value of the feedback signal FB relative to the internal supply voltage $Vcc_{int}$. Select circuit further comprises an AND gate having a first input that receives the output signal S71 of comparator 71 and an inverting second input receiving the undervoltage signal UVLO. Select circuit 7 further comprises a flip-flop 73 having a set input S that receives an output signal S72 of AND gate 72, and a reset input R that receives inverted indicator signal REFGOOD from an inverter 74. Select signal S7 is provided at the output of flip-flop 73.

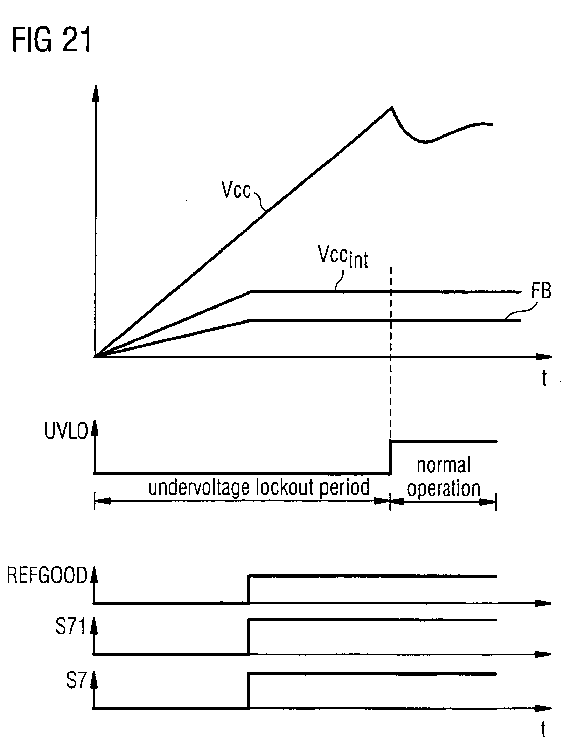

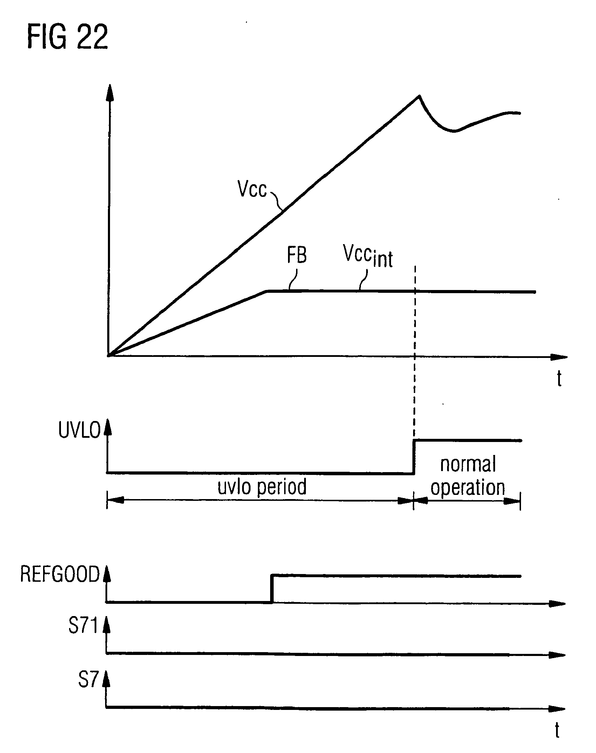

The function of select circuit 7 according to figure 19 will be apparent from figures 21 and 22 that show timing diagrams of supply voltage Vcc, internal supply voltage $Vcc_{int}$, feedback signal FB, undervoltage signal UVLO, indicator signal REFGOOD, comparator output signal S71 and select signal S7 for two different scenarios: a first scenario (figure 21) in which feedback terminal 102 is connected to the ground terminal via resistor 61; and a second scenario (figure 22) in which feedback terminal 102 is connected as usual, i.e. in which feedback terminal 102 is connected to the feedback loop only, but is not additionally connected to the ground terminal.

Referring to figure 21 feedback signal FB is lower than the internal supply voltage $Vcc_{int}$ in the first scenario. This results in a high signal level of the output signal S71 of comparator 71 that receives the feedback signal FB at its inverting input, and the internal supply voltage $Vcc_{int}$ at its non-inverting input. The high level of comparator output signal S71 causes flip-flop 73 to be set by AND gate output signal S72 before the end of undervoltage lockout period has been reached. Setting flip-flop 73 results in a high signal level of select signal S7, with the high signal level representing a first option to be chosen in the drive circuit 100. Referring to figure 22 feedback signal FB equals the internal supply voltage $Vcc_{int}$. This results in a low signal level of the comparator output signal S71, and the flip-flop 73 not being set during the undervoltage lockout period. Select signal S7 thereby keeps a low signal level that represents a second option to be chosen in the drive circuit.

Comparator 71 can be selected such that it has a hysteresis that causes comparator output signal S71 to go high only if a difference between the internal supply voltage $Vcc_{int}$ and the feedback signal is larger than a hysteresis value. This ensures that comparator output signal S71 keeps a low value even if there are slight differences between the internal supply voltage $Vcc_{int}$ and the feedback signal FB in the second scenario.

Instead of connecting feedback terminal 102 to ground potential in the first scenario feedback terminal 102 may either be connected to a terminal that has always a higher potential than the internal supply voltage $Vcc_{int}$. This potential may be the external supply potential Vcc, for example. Connecting the feedback terminal 102 to the external supply potential Vcc is depicted in dashed lines in figure 18. Figure 20 shows an example of the select circuit 7 that is used if feedback terminal 102 is connected to the external supply potential in the first scenario. The select circuit of figure 20 is different from the select circuit of figure 19 only in that the feedback signal FB is connected to the non-inverting input of comparator 71, while the internal supply voltage $Vcc_{int}$ is connected to the inverting input. In this circuit the output signal S71 of comparator 71 goes high if the feedback signal FB is higher than the internal supply voltage $Vcc_{int}$. Therefore, select signal S7 at the output of flip-flop 73 goes high if during the undervoltage lockout period the feedback signal FB is higher than the internal supply voltage $Vcc_{int}$.

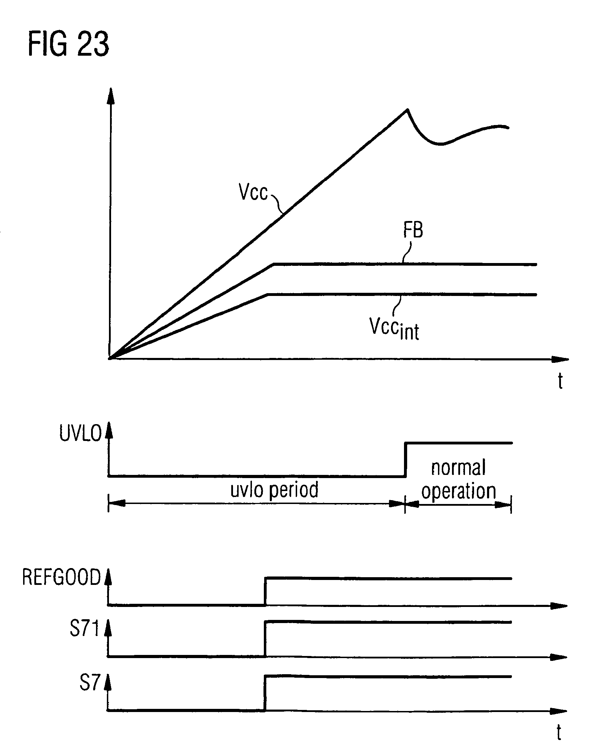

The functionality of the select circuit in figure 20 will be apparent from figure 23 that shows timing diagrams of supply voltage Vcc, internal supply voltage $Vcc_{int}$, feedback signal FB, undervoltage signal UVLO, indicator signal REFGOOD, comparator output signal S71 and select signal S7 for the case in which the feedback signal FB is connected to the terminal 105 for external supply potential Vcc. Besides the feedback signal, that is higher than the internal supply voltage Vcc, the timing diagrams of the remaining signals correspond to the timing diagrams in figure 21.

**Claims**

1. A drive circuit for providing a drive signal (S1) for a switch (M) in a switching converter, the drive circuit (100) comprising:

   an output terminal (101) for providing the drive signal (S1) ;
   a soft-start terminal (104) for applying a soft-start signal (Vs) thereto;
   a feedback terminal (102) for applying a feedback signal (FB) thereto;

   the drive circuit being capable of assuming one of the following operation states:

a latch-off mode in which the drive circuit (100) is deactivated;
a normal operation mode, in which a duration of drive pulses of the drive signal is dependent on the feedback signal (FB);
a soft-start mode, in which a duration of drive pulses of the drive signal (S1) is dependent on a voltage (Vs) at the soft-start terminal (104);
wherein the drive circuit is adapted to assume the latch-off mode dependent on the voltage (Vs) at the soft-start terminal (104), and is adapted to leave the latch-off mode only when a supply voltage (Vcc) received at a supply terminal (105) of the drive circuit falls below a reference value.

2. The drive circuit of claim 1 that is adapted to assume the latch-off mode if the soft-start signal (Vs) in normal operation mode or in soft-start mode falls below a given latch-off threshold (Vth_lo).

3. The drive circuit of claim 1 or 2 that is capable of assuming an undervoltage lockout mode, in which the drive circuit is disabled from generating drive pulses, and that is adapted to assume the latch-off mode if the soft-start signal falls below the latch-off threshold (Vth_lo) after a delay time (Td) after the end of the undervoltage lockout mode.

4. The drive circuit of one of the preceding claims, further comprising a power management (5) circuit for providing a supply voltage (Vcc),
the power management circuit (5) being adapted to cause the supply voltage (Vcc) to swing between a lower reference value and an upper reference value in latch-off mode,
and the drive circuit being adapted to leave latch-off mode if the supply voltage falls below a value that is equal to or lower than the lower reference value.

5. The drive circuit of one of the preceding claims that is adapted to assume a burst mode dependent on the feedback signal (FB) in which drive pulses are generated after the feedback signal (FB) has reached a burst-on threshold (Vth_bon), and in which no drive pulses are generated after the feedback signal (FB) has reached a burst-off threshold (Vth_boff).

6. The drive circuit of one of the preceding claims that is adapted to assume an auto restart mode dependent on the feedback signal (FB) in which the drive circuit is disabled from generating drive pulses after the feedback signal (FB) has reached an auto-restart threshold, and in which soft-start mode starts after the feedback signal has reached a further threshold different from the auto-restart threshold.

7. The drive circuit of one of the preceding claims further comprising:

an evaluation circuit (15) connected to the soft-start terminal (104) and being adapted to evaluate a voltage (Vs) at the soft-start terminal (104) dependent on the drive signal (S1) and/or dependent on an undervoltage lockout signal (UVLO) indicating the undervoltage lockout period, and being adapted to provide a latch-off signal (S5);
a latch-off circuit (41) receiving the latch-off signal (S5) and being adapted to transfer the drive circuit (100) into the latch-off mode dependent on the latch-off signal (S5).

**Patentansprüche**

1. Ansteuerschaltung zum Bereitstellen eines Ansteuersignals (S1) für einen Schalter (M) in einem Schaltwandler, wobei die Ansteuerschaltung (100) aufweist:

einen Ausgangsanschluss (101) zum Bereitstellen des Ansteuersignals (S1);
einen Soft-Start-Anschluss (104) zum Anlegen eines Soft-Start-Signals (Vs);
einen Rückkopplungsanschluss (102) zum Anlegen eines Rückkopplungssignals (FB);

wobei die Ansteuerschaltung dazu ausgebildet ist, einen der folgenden Betriebszustände anzunehmen:

einen Latch-Off-Modus, in dem die Ansteuerschaltung (100) deaktiviert ist;
einen Normalbetriebsmodus, in dem eine Dauer von Ansteuerimpulsen des Ansteuersignals abhängig ist von dem Rückkopplungssignal (FB);
einen Soft-Start-Modus, in dem eine Dauer von Ansteuerimpulsen des Ansteuersignals (S1) abhängig ist von einer Spannung (Vs) am Soft-Start-Anschluss (104);
wobei die Ansteuerschaltung dazu ausgebildet ist, den Latch-Off-Modus abhängig von der Spannung (Vs) an dem Soft-Start-Anschuss (104) anzunehmen, und dazu ausgebildet ist, den Latch-Off-Modus nur dann zu verlassen, wenn eine an einem Versorgungsanschluss (105) der Ansteuerschaltung erhaltene Versorgungsspannung (Vcc) unter einen Referenzwert absinkt.

2. Ansteuerschaltung nach Anspruch 1, die dazu ausgebildet ist, den Latch-Off-Modus anzunehmen, wenn das Soft-Start-Signal (Vs) im Normalbetriebsmodus oder im Soft-Start-Modus unter eine vorgegebene Latch-Off-Schwelle (Vth_lo) absinkt.

3. Ansteuerschaltung nach Anspruch 1 oder 2, die dazu ausgebildet ist, einen Unterspannungsabschaltmodus anzunehmen, in dem die Ansteuerschaltung deaktiviert ist, Ansteuerimpulse zu erzeugen, und die dazu ausgebildet ist, den Latch-Off-Modus anzunehmen, wenn das Soft-Start-Signal nach einer Verzögerungszeit (Td) nach dem Ende des Unterspannungsabschaltmodus unter die Latch-Off-Schwelle (Vth_lo) absinkt.

4. Ansteuerschaltung nach einem der vorangehenden Ansprüche, die weiterhin eine Leistungsmanagementschaltung (5) zum Bereitstellen einer Versorgungsspannung (Vcc) aufweist, wobei die Leistungsmanagementschaltung (5) dazu ausgebildet ist, dafür zu sorgen, dass im Latch-Off-Modus die Versorgungsspannung (Vcc) zwischen einem unteren Referenzwert und einem oberen Referenzwert schwingt, und wobei die Ansteuerschaltung dazu ausgebildet ist, den Latch-Off-Modus zu verlassen, wenn die Versorgungsspannung unter einen Wert absinkt, der gleich dem oder niedriger als der untere Referenzwert ist.

5. Ansteuerschaltung nach einem der vorangehenden Ansprüche, die dazu ausgebildet ist, abhängig von dem Rückkopplungssignal (FB) einen Burstmodus abzunehmen, in dem Ansteuerimpulse erzeugt werden, nachdem das Rückkopplungssignal (FB) eine Burst-Ein-Schwelle (Vth_bon) erreicht hat, und in dem keine Ansteuerimpulse erzeugt werden, nachdem das Rückkopplungssignal (FB) eine Burst-Aus-Schwelle (Vth_boff) erreicht hat.

6. Ansteuerschaltung nach einem der vorangehenden Ansprüche, die dazu ausgebildet ist, abhängig von dem Rückkopplungssignal (FB) einen Auto-Neustart-Modus anzunehmen, in dem die Ansteuerschaltung deaktiviert ist, Ansteuerimpulse zu erzeugen, nachdem das Rückkopplungssignal (FB) eine Auto-Neustart-Schwelle erreicht hat, und in dem ein Soft-Start-Modus beginnt, nachdem das Rückkopplungssignal eine weitere Schwelle erreicht hat, die sich von der Auto-Neustart-Schwelle unterscheidet.

7. Ansteuerschaltung nach einem der vorangehenden Ansprüche, die weiterhin aufweist:

eine Auswerteschaltung (15), die an den Soft-Start-Anschluss (104) angeschlossen ist und dazu ausgebildet ist, eine Spannung (Vs) an dem Soft-Start-Anschluss (104) abhängig von dem Ansteuersignal (S1) und/oder abhängig einem Unterspannungsabschaltsignal (UVLO), das eine Unterspannungsabschaltperiode anzeigt, anzunehmen, und die dazu ausgebildet ist, ein Latch-Off-Signal (S5) bereitzustellen;
eine Latch-Off-Schaltung (41), die das Latch-Off-Signal (S5) erhält und dazu ausgebildet ist, die Ansteuerschaltung (100) abhängig von dem Latch-Off-Signal (S5) in den Latch-Off-Modus zu überführen.

## Revendications

1. Circuit de commande pour fournir un signal (S1) de commande d'un commutateur (M) d'un convertisseur à découpage, le circuit (100) de commande comprenant :

une borne (101) de sortie pour fournir le signal (S1) de commande ;
une borne (104) de mise sous tension sans appel de courant pour y appliquer un signal (Vs) de mise sous tension sans appel de courant ;
une borne (102) de réaction pour y appliquer un signal (FB) de réaction ;

le circuit de commande étant apte à assumer l'un des états de fonctionnement suivants :

un mode de déverrouillage, dans lequel le circuit (100) d'attaque est désactivé ;
un mode de fonctionnement normal, dans lequel une durée des impulsions de commande du signal d'attaque dépend du signal (FB) de réaction ;

un mode de mise sous tension sans appel de courant, dans lequel une durée des impulsions de commande du signal (S1) de commande dépend d'une tension (Vs) à la borne (104) de mise sous tension sans appel de courant ;

le circuit de commande étant adapté pour assumer le mode de déverrouillage dépendant de la tension (Vs) à la borne (104) de mise sous tension sans appel de courant et est adapté pour quitter le mode de déverrouillage, seulement lorsqu'une tension (Vcc) d'alimentation reçue à la borne (105) d'alimentation du circuit du circuit de commande, devient inférieure à une valeur de référence.

2. Circuit de commande suivant la revendication 1, qui est adapté pour assumer le mode de déverrouillage, si le signal (Vs) de mise sous tension sans appel de courant en mode de fonctionnement normal ou en mode de mise sous tension sans appel de courant devient inférieur à un seuil (Vth_lo) de déverrouillage donné.

3. Circuit de commande suivant la revendication 1 ou 2, qui est apte à assumer un mode de verrouillage en sous tension, dans lequel le circuit de commande est empêché de produire des impulsions de commande, et qui est adapté pour assumer le mode de déverrouillage, si le signal de mise sous tension sans appel de courant devient inférieur au seuil (Vth_lo) de déverrouillage, après un retard (Td) après la fin du mode de verrouillage en sous-tension.

4. Circuit de commande suivant l'une des revendications précédentes, comprenant, en outre, un circuit (5) de gestion de puissance pour fournir une tension (Vcc) d'alimentation,

le circuit (5) de gestion de puissance étant adapté pour faire que la tension (Vcc) d'alimentation oscille entre une valeur de référence inférieure et une valeur de référence supérieure dans le mode de déverrouillage

et le circuit de commande étant adapté pour quitter le mode de déverrouillage, si la tension d'alimentation devient inférieure à une valeur, qui est inférieure ou égale à la valeur inférieure de référence.

5. Circuit de commande suivant l'une des revendications précédentes, qui est adapté pour assurer un mode en rafales dépendant du signal (FB) de réaction, dans lequel des impulsions de commande sont produites après que le signal (FB) de réaction a atteint un seuil (Vth_bon) de transmission en rafales et dans lequel des impulsions de commande ne sont pas produites après que le signal (FB) de réaction a atteint un seuil (Vth_boff) de non-transmission en rafales.

6. Circuit de commande suivant l'une des revendications précédentes, qui est adapté pour assumer un mode d'auto remise en tension dépendant du signal (FB) de réaction, dans lequel le circuit de commande est empêché de produire des impulsions de commande après que le signal (FB) de réaction a atteint un seuil d'auto remise en tension et dans lequel le mode de mise sous tension sans appel de courant débute après que le signal de réaction a atteint un autre seuil différent du seuil d'auto remise en tension.

7. Circuit de commande suivant l'une des revendications précédentes, comprenant :

comprenant, en outre, un circuit (15) d'évaluation connecté à la borne (104) de mise sous tension sans appel de courant et conçu pour évaluer une tension (Vs) à la borne (104) de mise sous tension sans appel de courant en fonction du signal (S1) de commande et/ou en fonction d'un signal (UVLO) de verrouillage en sous-tension indiquant la période de verrouillage en sous-tension et adapté pour fournir un signal (S5) de déverrouillage ;

un circuit (41) de déverrouillage recevant le signal (S5) de déverrouillage et étant adapté pour mettre le circuit (100) de commande dans le mode de déverrouillage en fonction du signal (S5) de déverrouillage.

FIG 1

EP 2 077 608 B1

FIG 2

## FIG 3

## FIG 4

FIG 5

FIG 6

FIG 7

**FIG 8**

**FIG 9**

FIG 10

## FIG 11

# FIG 12

# FIG 13

FIG 14

EP 2 077 608 B1

## FIG 15

## FIG 16

# FIG 17

FIG 18

**FIG 19**

**FIG 20**

## FIG 21

# FIG 22

## FIG 23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1648080 A1
- US 20070064358 A1
- US 20070296386 A1

**Non-patent literature cited in the description**

- Infineon Technologies AG. *F3 ICE3BS02L,* 28 September 2005
- LTM4600HV. LINEAR TECHNOLOGY CORPORATION, 2005
- F3 PWM controller ICE3BS03LJG Off-Line SMPS Current Mode Controller with integrated 500V Startup Cell (Latched and frequency jitter Mode). *Infineon Technologies AG,* 06 December 2007
- CoolSET™-F3 (Jitter Version) ICE3BO365JG ICE3B0565JG Off-Line SMPS Current Mode Controller with integrated 650V Startup Cell/Depletion C001MOS™. *Infineon Technologies AG,* 14 November 2006